# EUROPÄISCHE PATENTSCHRIFT

(11) **EP 3 590 761 B1**
(45) Veröffentlichungstag und Bekanntmachung des Hinweises auf die Patenterteilung: **09.08.2023**
(21) Anmeldenummer: 19179777.8
(22) Anmeldetag: 12.06.2019
(51) Int. Cl.: B60P 7/04, B65D 88/22, B60J 5/06

(54) **NUTZFAHRZEUGAUFBAU**
COMMERCIAL VEHICLE STRUCTURE
CARROSSERIE DE VÉHICULE UTILITAIRE

(30) Priorität: 04.07.2018 DE 102018005276
(43) Veröffentlichungstag der Anmeldung: 08.01.2020
(73) Patentinhaber: Fahrzeugwerk Bernard Krone GmbH & Co. KG, 49757 Werlte (DE)
(72) Erfinder: Schwenen, Ralf, 49716 Meppen (DE)
(74) Vertreter: Busse & Busse

(56) Entgegenhaltungen:
- EP-A1- 2 151 371
- CN-B- 104 724 189
- DE-A1-102015 109 172
- DE-U1-202013 001 899
- GB-A- 1 542 812

## Beschreibung

Die vorliegende Erfindung bezieht sich auf einen Nutzfahrzeugaufbau mit einem Nutzfahrzeugchassis sowie mit zumindest einer an dem Nutzfahrzeugchassis festgelegten Eckrunge und mit einer Schiebeplaneneinheit, die mit einem Planenspannprofil, insbesondere einem Planenspannrohr verbunden ist, wobei dem Planenspannprofil eine Sicherungsvorrichtung mit einem Sicherungselement zugeordnet ist, das aus einer Freigabestellung in eine das Planenspannprofil im gespannten Zustand der Schiebeplaneneinheit sichernde Betriebsstellung überführbar ist.

Nutzfahrzeugaufbauten der vorgenannten Art mit einem Nutzfahrzeugchassis und zumindest einer Schiebeplaneneinheit, die über ein einer Eckrunge zugeordnetes Planenspannprofil zu spannen ist, sind allgemein bekannt. Zum Spannen werden dabei üblicherweise Ratschen u. dgl. Spannmittel verwendet, die es ermöglichen, mit nur wenigen Handgriffen nach einem Verschiebevorgang zum Verschließen des Nutzfahrzeugaufbaus die Schiebeplaneneinheit endzuverspannen.

Nutzfahrzeugaufbauten dieser Art werden jedoch nicht nur für den Straßentransport von Gütern eingesetzt, sondern auch auf Güterzügen transportiert. Dabei können sehr hohe Kräfte auf die Schiebeplaneneinheit einwirken, insbesondere wenn sich Hochgeschwindigkeitszüge auf parallelen Gleisen begegnen und eine starke Druckwelle erzeugen. Trifft eine solche Druckwelle auf eine verspannte Schiebeplaneneinheit, kann dies dazu führen, dass ein Planenspannprofil aus seiner Halterung am Nutzfahrzeugchassis herausgelöst wird.

Um dieses Risiko zu vermindern, sind Nutzfahrzeugaufbauten der eingangs genannten Art bekannt, bei der das Planenspannprofil in der gespannten Betriebsstellung durch eine Sicherungseinrichtung an einer Vertikalbewegung gehindert wird. So ist aus der DE 20 2013 001 899 ein Nutzfahrzeugaufbau der eingangs genannten Art bekannt, bei dem an der einem Spannelement zugeordneten Eckrunge eine Sicherungsvorrichtung angeordnet ist, die zwischen einer Sperrposition und einer Freigabeposition hin und her verlagerbar ist, wobei die Sicherungsvorrichtung einen Sperrkörper aufweist, der in der Sperrposition der Sicherungsvorrichtung einen Hubweg des Spannelementes zum Lösen aus der Verschlussstellung formschlüssig blockiert. Mit dieser konstruktiven Lösung ist eine sichere Arretierung des Spannprofilteils in der Spannendstellung zu bewerkstelligen. Die dazu benötigten Bauteile sind jedoch erheblich und verursachen einen kostenintensiven Baumehraufwand.

Gleiches gilt auch für den aus der EP 2 949 492 B1 bekannten Nutzfahrzeugaufbau, bei dem die Eckrunge mit einer derartigen Aufnahme ausgebildet ist, dass besondere Arretiermittel in der Spannendstellung der Schiebeplaneneinheit derart in die Aufnahme eintauchen, dass sich die Arretiermittel innerhalb der eckrungenseitigen Aufnahme zwischen Wandungsteilen der Aufnahme und Planenspannprofil horizontal verkeilen. Die entsprechenden Arretiermittel sind auf der Seitenplaneneinheit aufgebracht, so dass während einer Verkeilung erhebliche Kräfte auf die Seitenplaneneinheit einwirken. Bei einer Begegnung von Hochgeschwindigkeitszügen können sich die auf den sich entgegenkommenden Zügen geladenen Nutzfahrzeugaufbauten begegnen und sind der vorbeschriebenen großen Druckwelle ausgesetzt, so dass sich die auf die Seitenplanen durch die Arretiermittel einwirkenden Kräfte noch enorm erhöhen. Insgesamt ist dadurch nicht nur der Bauaufwand erhöht. Darüber hinaus ist durch diese Art der Sicherung der Planenspannprofile gegen eine unbeabsichtigte Bewegung horizontal nach außen die Schiebeplaneneinheit sehr verschleißanfällig.

Aus der EP 2 151 371 A1 ist ein Nutzfahrzeugaufbau mit einer Stirnwand und einer vorzugsweise Flügeltüren umfassenden Rückwand sowie mit sich zwischen der Stirnwand und der Rückwand erstreckenden Seitenwandplanen bekannt. Die Seitenwandplanen haben an ihrer vorderen und/oder hinteren Seitenwandkante eine eine Spannrolle umfassende Spannstange. Des Weiteren sind höhenverstellbare Eckrungen vorgesehen. Die Spannstange hat ein Spannstangenrohr und eine innerhalb des Spannstangenrohres gelegene Spannrolle. Die Spannstange ihrerseits hat Bohrungen, in die Verriegelungselemente des Spannstangenrohres einzubringen sind. Verriegelungselemente können die Spannrolle hinsichtlich ihrer Verdrehbarkeit blockieren. Eine Sicherung des Planenspannprofils in der Planenendspannstellung gegen eine Bewegung nach oben, ist dabei jedoch mit baulich einfachen Mitteln nicht möglich.

Es ist Aufgabe der vorliegenden Erfindung, ein Nutzfahrzeugaufbau der eingangs genannten Art derart weiterzubilden, dass dieser mit vermindertem Bauaufwand das Planenspannprofil in der Planenendspannstellung gegen unbeabsichtigtes Lösen des Planenspannprofils vertikal nach oben sichert.

Zur Lösung dieser Aufgabe zeichnet sich der Nutzfahrzeugaufbau durch die in Patentanspruch 1 angegebenen Merkmale aus.

Damit ist ein Nutzfahrzeugaufbau geschaffen, bei dem mit nur geringem Bauaufwand und auch mit nur geringem Bedienaufwand automatisch das Planenspannprofil im Verlaufe einer Endverspannung der Schiebeplaneneinheit in die das Planenspannprofil gegen ein unbeabsichtigtes Herauslösen aus der Halterung des Planenspannprofils sichernde Betriebsstellung, also die Arretierstellung überführt werden kann. Diese Endspannbewegung der Schiebeplaneneinheit braucht noch nicht einmal eine vollständige Umdrehung eines als Planenspannprofil ausgebildeten Planenspannrohres sein. Es reicht völlig aus, wenn beispielsweise durch eine ¾- Umdrehung eines Planenspannrohres die Schiebeplaneneinheit endgespannt wird, wobei diese 270°-Teildrehbewegung eines Planenspannrohres völlig ausreicht, um den Sicherungskörper aus einer Freigabestellung derart in eine Schlitzöffnung eintauchen zu lassen bzw. unter ein Widerlagerelement der Eckrunge oder eines sonstigen Nutzfahrzeugchassisbauteils zu bringen, dass das Planenspannprofil sicher gegen ein Herauslösen aus einer Halterung und mithin an einer Bewegung parallel zu seiner Längserstreckung nach oben gesichert ist.

Der Sicherungskörper kann metallisch ausgebildet sein nach Art eines Sicherungsschenkels, z. B. nach Art eines kurzen Flacheisens mit z. B. vorderen abgerundeten Enden. Die Schlitzöffnungen können einfache Rechteckschlitze sein, die in eine vorhandene Wandung einer Eckrunge und/oder eines Nutzfahrzeugchassisteils in fertigungstechnisch einfacher Weise eingebracht wird. Diese sind sowohl in der Wandung eines Nutzfahrzeugchassis als auch in der Wandung einer Eckrunge vorgesehen und zwar derart, dass diese miteinander fluchten, so dass der Sicherungskörper in der ein Planenspannprofil sichernden Endbetriebsstellung in beiden Schlitzöffnungen gelegen ist.

Diese Schlitzöffnungen sind im Hinblick auf die Abmessungen des Sicherungskörpers derart auszubilden, dass der Sicherungskörper in diese hineinbewegt werden kann, z. B. hineingedreht werden kann und auch wieder herausgedreht werden kann und in der das Planenspannprofil sichernden Betriebsstellung so nah an einem oberen Widerlagerbereich der Schlitzöffnung gelegen ist, dass das Planenspannprofil nur geringfügige Vertikalbewegungen ausführen kann. Dadurch, dass das Planenspannprofil nur geringfügige Bewegungen ausführen kann, ist auch ein Zollverschleißseil sicher an einem Spannmittel des Planenspannprofils zu führen bzw. festzulegen, da dieses keine Vertikalbewegungen ausführen kann. Zusätzliche Abdeckungen des Spannmittels oder des Planenspannprofils, die ein Aushebeln verhindern sollen, sind daher nicht notwendig.

In fertigungstechnisch einfacher Weise kann der Sicherungskörper mit dem Planenspannprofil verschweißt vergossen, verschraubt, vermietet oder sonst wie verbunden sein. Das Planenspannprofil kann in herkömmlicher Weise aus einem Planenspannrohr mit einer Schlitzöffnung für einen Keder einer Schienenplaneneinheit ausgerüstet sein. Endseitig, z. B. im unteren Endbereich kann ein Planenspannrohrendstück mit einem Vierkant vorgesehen sein. Auch an diesem Planenspannrohrendstück kann der Sicherungskörper befestigt, z. B. angeschweißt sein. Dieser kann mit entsprechenden Spannmitteln, z. B. einer Ratsche verbunden sein, so dass mit dieser Ratsche sowohl das Planenspannprofil als auch der Sicherungskörper bewegt werden kann. Der Sicherungskörper kann allerdings nicht nur unten an dem Planenspannprofil sondern auch auf der gegenüberliegenden oberen Seite des Planenspannprofils vorgesehen sein, wozu dann auch entsprechende Schlitzöffnungen im oberen Bereich der Eckrunge und/oder des Fahrzeugchassis vorgesehen sein könnten.

Zur weiteren Erläuterung der Erfindung wird auf weitere Unteransprüche, die nachfolgende Beschreibung und die Zeichnung verwiesen. In der Zeichnung zeigen:

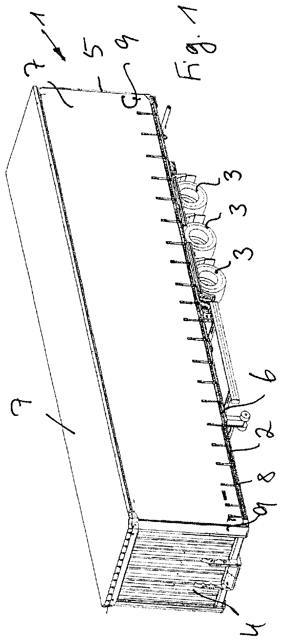

- Fig. 1:: Ausschnittsweise in einer perspektivischen Darstellung eines Nutzfahrzeugaufbaus nach der Erfindung;
- Fig. 2:: vergrößert den vorderen Eckbereich (ausschnittsweise) des Ausführungsbeispiels nach Fig. 1 mit einem Sicherungskörper in einer Schließstellung;
- Fig. 3:: eine Schnittdarstellung (ausschnittsweise) auf das Ausführungsbeispiel nach Fig. 2;
- Fig. 4:: ausschnittsweise in perspektivischer Darstellung das Ausführungsbeispiel nach Fig. 1 mit dem Sicherungskörper in der Schließstellung, und
- Fig. 5:: das Ausführungsbeispiel nach Fig. 4 mit einer Darstellung des Sicherungskörpers in der das dortige Spannrohr sichernden Betriebsstellung.

In der Zeichnung sind übereinstimmende Teile mit übereinstimmenden Bezugsziffern versehen. Allgemein mit 1 ist ein Nutzfahrzeugaufbau beziffert mit einem Fahrzeugchassis 2, das über Räder 3 auf dem Erdboden abzustützen ist. Dieser Nutzfahrzeugaufbau hat eine Vorderwand 4, eine Rückwand 5, einen Laderaum-boden 6, ein Dach 7.1 sowie eine seitliche Schiebeplaneneinheit 7, die über Gurte 8 am Fahrzeugchassis 2 befestigt ist und beispielsweise auch ein Zollsicherungsseil aufweisen kann. Es sind Eckrungen 9 vorgesehen, zwischen denen die Schiebeplaneneinheit 7 zu verspannen ist.

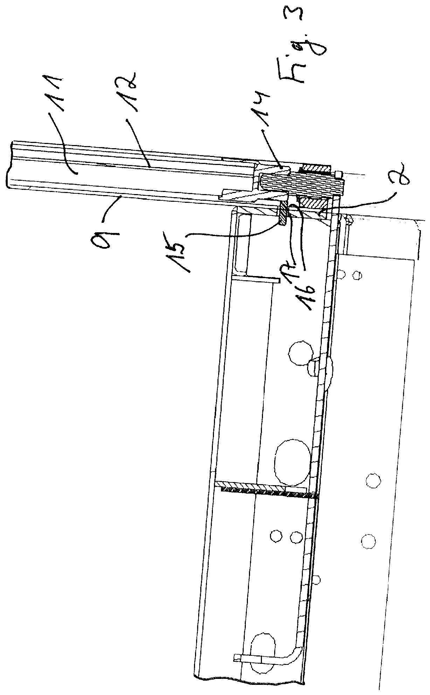

Dazu ist in einem innenliegenden Ausschnitt einer Eckrunge 9 eine Aufnahme 10 vorgesehen, in der ein Planenspannprofil 11 in Gestalt eines Planenspannrohres vorgesehen ist mit einer Schlitzöffnung 12 (Fig. 3), in die ein Keder der Schiebeplaneneinheit 7 einzuführen ist. Endseitig weist das Planenspannprofil 11 ein Planenspannprofilendstück 13 auf mit einem Außenvierkant 14, an dem ein Sicherungskörper 15 angeschweißt ist.

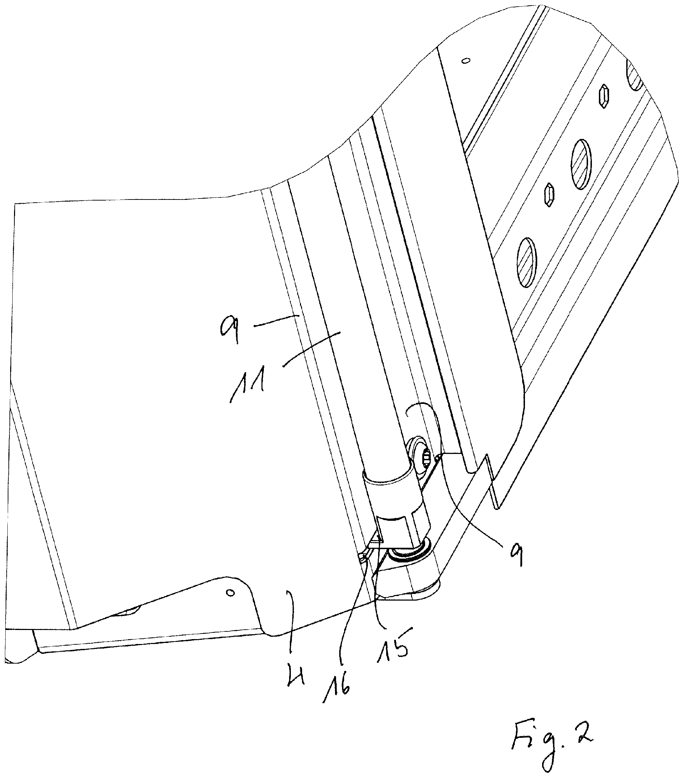

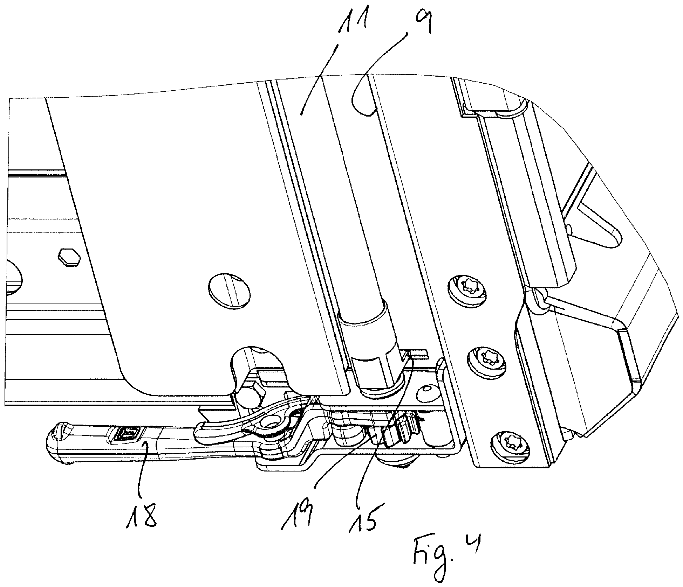

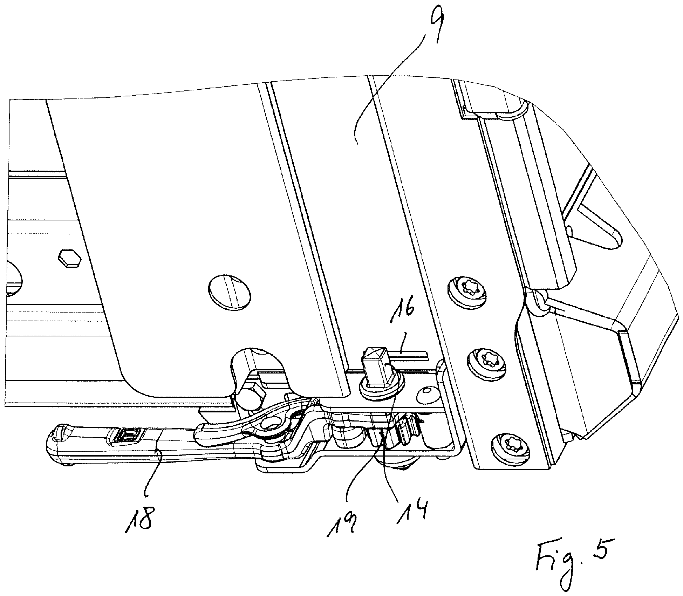

In der Darstellung nach Fig. 2 befindet sich dieser Sicherungskörper 15 in einer das Planenspannprofil 11 sichernden Sperrstellung. In der Darstellung nach Fig. 3 befindet sich der Sicherungskörper 15 in Gestalt des angeschweißten Flacheisens innerhalb von zwei Schlitzöffnungen, nämlich den Schlitzöffnungen 16 und 17. Die Schlitzöffnung 16 ist in einer Wandung einer Eckrunge 9 gelegen und die Schlitzöffnung 17 in einem Teil des Fahrzeugchassis 2. Die beiden Schlitzöffnungen 16 und 17 fluchten miteinander, so dass der Sicherungskörper sicher während einer Spannbewegung des Planenspannprofils 11 in diese Öffnungen hineingedreht werden kann in die Endbetriebstellung, wie sie in Fig. 3 dargestellt ist. Die Fig. 4 und 5 verdeutlichen noch einmal die Sperrstellung und die das Endplanenspannprofil sichernde Betriebsstellung des Sicherungskörpers 15.

In diesen Darstellungen nach Fig. 4 und 5 sind auch noch die Spannbedienmittel in Gestalt des Spannhebels 18 angedeutet, der über eine Ratscheneinheit 19 die entsprechende Bewegung auf das Spannprofil 11 und damit automatisch auch auf den Sicherungskörper 15 ausübt.

## Patentansprüche

1. Nutzfahrzeugaufbau (1) mit einem Nutzfahrzeugchassis (2) sowie mit zumindest einer an dem Nutzfahrzeugchassis (2) festgelegten Eckrunge (9) und mit einer Schiebeplaneneinheit (7), die mit einem Planenspannprofil (11), insbesondere einem Planenspannrohr verbunden ist, wobei dem Planenspannprofil (11) eine Sicherungsvorrichtung mit einem Sicherungselement (15) zugeordnet ist, das aus einer Freigabestellung in eine das Planenspannprofil (11) im gespannten Zustand der Schiebeplaneneinheit sichernde Betriebsstellung überführbar ist, wobei der Nutzfahrzeugaufbau **dadurch gekennzeichnet ist, dass** das Sicherungselement (15) als ein bewegungsfest mit dem Planenspannprofil (11) verbundener Sicherheitskörper ausgebildet ist, der mit einer Bewegung des Planenspannprofils (11) aus der Freigabestellung selbsttätig in die innerhalb von in der Eckrunge (9) und in einem Nutzfahrzeugchassisteil ausgebildeten Schlitzöffnungen (16, 17) gelegene sichernde Betriebsstellung überführbar ist, in der der Sicherungskörper (15) das Planenspannprofil (11) gegen eine Bewegung koaxial zu seiner Längserstreckung nach oben hin sichert, und dass der Sicherungskörper (15) in der das Planenspannprofil (11) sichernden Betriebsstellung jeweils in einer in dem Nutzfahrzeugchassisteil gelegenen ersten Schlitzöffnung (17) und einer in der Eckrunge (9) ausgebildeten zweiten Schlitzöffnung (16) gelegen ist, und dass die Schlitzöffnung (17) im Nutzfahrzeugchassisteil und die Schlitzöffnung (16) in der Eckrunge (9) miteinander fluchten.

2. Nutzfahrzeugaufbau (1) nach Anspruch 1, **dadurch gekennzeichnet, dass** der Sicherungskörper (15) aus seiner Freigabestellung durch eine Schwenkbewegung von mehr als 90°, bevorzugt von 270°, in seine das Planenspannprofil (11) sichernde Betriebsstellung überführbar ist.

3. Nutzfahrzeugaufbau (1) nach Anspruch 1, **dadurch gekennzeichnet, dass** der Sicherungskörper (15) mitsamt dem Planenspannprofil (11) über eine Bewegungsratsche oder einen Hebel (18, 19) aus der Freigabestellung in die Planenspannprofil (11) sichernde Betriebsstellung überführbar ist.

4. Nutzfahrzeugaufbau (1) nach einem der Ansprüche 1 bis 3, **dadurch gekennzeichnet, dass** der Sicherungskörper (15) als starrer Schenkel aus insbesondere einem metallischen Material ausgebildet ist.

5. Nutzfahrzeugaufbau (1) nach Anspruch 4, **dadurch gekennzeichnet, dass** der Sicherungskörper (15) als metallischer Flacheisenschenkel ausgebildet ist.

6. Nutzfahrzeugaufbau (1) nach Anspruch 4 oder 5, **dadurch gekennzeichnet, dass** der Sicherungskörper (15) mit dem Planenspannprofil (11) verschweißt ist.

7. Nutzfahrzeugaufbau (1) nach einem der Ansprüche 1 bis 6, **dadurch gekennzeichnet, dass** der Sicherungskörper (15) an einem Endstück (13) des Planenspannprofils (11) angebracht ist und mit dem Endstück (13) ein mit dem Endstück (13) ein Planenspannprofilrohr verbunden, in dem eine Schlitzöffnung zur Aufnahme eines Keders einer Schiebeplaneneinheit (7) vorgesehen ist.

8. Nutzfahrzeugaufbau (1) nach einem der Ansprüche 1 bis 6, **dadurch gekennzeichnet, dass** der Sicherungskörper (15) in einer Schlitzöffnung zur Aufnahme eines Keders einer Schiebeplaneneinheit (7) vorgesehen ist.

9. Nutzfahrzeugaufbau (1) nach einem der Ansprüche 1 bis 8, **dadurch gekennzeichnet, dass** die Schlitzöffnungen (16, 17) in der Eckrunge (9) und dem Nutzfahrzeugchassisteil am unteren und oberen Ende des Planenspannprofils (11) vorgesehen sind und dass diesen beiden Schlitzöffnungen (16, 17) jeweils am unteren Ende und am oberen Ende des Planenspannprofils (11) entsprechende Sicherungskörper (15) zugeordnet sind, die mit Höhenabstand parallel zueinander an einem oberen Ende und einem unteren Ende des Planenspannprofils (11) vorgesehen sind.

## Claims

1. Commercial vehicle body (1) comprising a commercial vehicle chassis (2), at least one corner stanchion (9) fixed to the commercial vehicle chassis (2), and a sliding tarpaulin unit (7) which is connected to a tarpaulin tensioning profile (11), in particular a tarpaulin tensioning tube, a securing device having a securing element (15) being associated with the tarpaulin tensioning profile (11), which securing device can be transferred from a release position into an operating position which secures the tarpaulin tensioning profile (11) in the tensioned state of the sliding tarpaulin unit, the commercial vehicle structure being **characterized in that** the securing element (15) is designed as a safety body which is immovably connected to the tarpaulin tensioning profile (11) and which, with a movement of the tarpaulin tensioning profile (11) out of the release position, can be automatically transferred into the securing operating position within slot openings (16, 17) formed in the corner stanchion (9) and in a commercial vehicle chassis part, in which position the securing body (15) secures the tarpaulin tensioning profile (11) against an upward movement coaxially to its longitudinal extension, and **in that** the securing body (15), in the operating position securing the tarpaulin tensioning profile (11), is in each case located in a first slot opening (17), which is located in the commercial vehicle chassis part, and a second slot opening (16) formed in the corner stanchion (9), and **in that** the slot opening (17) in the commercial vehicle driver part and the slot opening (16) in the corner stanchion (9) are aligned with one another.

2. Commercial vehicle body (1) according to claim 1, **characterized in that** the securing body (15) can be transferred from its release position by a pivoting movement of more than 90°, preferably of 270°, into its operating position securing the tarpaulin tensioning profile (11).

3. Commercial vehicle body (1) according to claim 1, **characterized in that** the securing body (15), together with the tarpaulin tensioning profile (11), can be transferred from the release position into the operating position securing the tarpaulin tension profile (11) via a movement ratchet or a lever (18, 19).

4. Commercial vehicle body (1) according to any of claims 1 to 3,
**characterized in that** the securing body (15) is designed as a rigid leg made of, in particular, a metal material.

5. Commercial vehicle body (1) according to claim 4, **characterized in that** the securing body (15) is designed as a metal flat iron leg.

6. Commercial vehicle body (1) according to either claim 4 or claim 5,
**characterized in that** the securing body (15) is welded to the tarpaulin tensioning profile (11).

7. Commercial vehicle body (1) according to any of claims 1 to 6,
**characterized in that** the securing body (15) is attached to an end piece (13) of the tarpaulin tensioning profile (11), and, with the end piece (13), a with the end piece (13) a tarpaulin tensioning profile tube connected, in which a slot opening for receiving piping of a sliding tarpaulin unit (7) is provided.

8. Commercial vehicle body (1) according to any of claims 1 to 6,
**characterized in that** the securing body (15) is provided in a slot opening for receiving piping of a sliding tarpaulin unit (7).

9. Commercial vehicle body (1) according to any of claims 1 to 8,
**characterized in that** the slot openings (16, 17) are provided in the corner stanchion (9) and in the commercial vehicle chassis part at the lower and upper ends of the tarpaulin tensioning profile (11), and **in that** corresponding securing bodies (15), which are provided at a vertical distance in parallel with one another at an upper end and a lower end of the tarpaulin tensioning profile (11), are assigned to each of these two slot openings (16, 17) at the lower end and the upper end of the tarpaulin tensioning profile (11).

## Revendications

1. Carrosserie de véhicule utilitaire (1) comportant un châssis de véhicule utilitaire (2) et comportant au moins un montant d'angle (9) fixé au châssis de véhicule utilitaire (2) et comportant une unité de bâche coulissante (7) qui est reliée à un profilé de serrage de bâche (11), en particulier à un tube de serrage de bâche, un dispositif de sécurisation comportant un élément de sécurisation (15) étant associé au profilé de serrage de bâche (11), lequel élément de sécurisation peut être transféré d'une position de libération à une position de fonctionnement sécurisant le profilé de serrage de bâche (11) lorsque l'unité de bâche coulissante est à l'état tendu, la carrosserie de véhicule utilitaire étant **caractérisée en ce que** l'élément de sécurisation (15) est réalisé sous la forme d'un corps de sécurité relié de manière fixe en mouvement au profilé de serrage de bâche (11), lequel corps de sécurité peut, grâce à un mouvement du profilé de serrage de bâche (11), être transféré automatiquement de la position de libération à la position de fonctionnement de sécurisation se trouvant à l'intérieur d'ouvertures en forme de fente (16, 17) réalisées dans le montant d'angle (9) et dans une partie de châssis de véhicule utilitaire, dans laquelle position de fonctionnement le corps de sécurisation (15) sécurise le profilé de serrage de bâche (11) contre un mouvement de manière coaxiale par rapport à son extension longitudinale vers le haut, **et en ce que** le corps de sécurisation (15) se trouve dans la position de fonctionnement sécurisant le profilé de serrage de bâche (11) respectivement dans une première ouverture en forme de fente (17) se trouvant dans la partie de châssis de véhicule utilitaire et dans une seconde ouverture en forme de fente (16) réalisée dans le montant d'angle (9), **et en ce que** l'ouverture en forme de fente (17) dans la partie de châssis de véhicule utilitaire et l'ouverture en forme de fente (16) dans le montant d'angle (9) sont alignées entre elles.

2. Carrosserie de véhicule utilitaire (1) selon la revendication 1,
**caractérisée en ce que** le corps de sécurisation (15) peut être transféré de sa position de libération à sa position de fonctionnement sécurisant le profilé de serrage de bâche (11) par un mouvement de pivotement de plus de 90°, de préférence de 270°.

3. Carrosserie de véhicule utilitaire (1) selon la revendication 1,
**caractérisée en ce que** le corps de sécurisation (15) peut être transféré, conjointement avec le profilé de serrage de bâche (11), de la position de libération à la position de fonctionnement sécurisant le profilé de serrage de bâche (11) par l'intermédiaire d'un cliquet de déplacement ou d'un levier (18, 19).

4. Carrosserie de véhicule utilitaire (1) selon l'une des revendications 1 à 3,
**caractérisée en ce que** le corps de sécurisation (15) est réalisé sous la forme d'une branche rigide en particulier à base d'un matériau métallique.

5. Carrosserie de véhicule utilitaire (1) selon la revendication 4,
**caractérisée en ce que** le corps de sécurisation (15) est réalisé sous la forme d'une branche en fer plat métallique.

6. Carrosserie de véhicule utilitaire (1) selon la revendication 4 ou 5,
**caractérisée en ce que** le corps de sécurisation (15) est soudé au profilé de serrage de bâche (11).

7. Carrosserie de véhicule utilitaire (1) selon l'une des revendications 1 à 6, **caractérisée en ce que** le corps de sécurisation (15) est monté au niveau d'une pièce d'extrémité (13) du profilé de serrage de bâche (11) et relié à la pièce d'extrémité (13) un tube de profilé de serrage de bâche avec la pièce d'extrémité (13), dans lequel tube une ouverture en forme de fente est prévue pour la réception d'un bourrelet d'une unité de bâche coulissante (7).

8. Carrosserie de véhicule utilitaire (1) selon l'une des revendications 1 à 6, **caractérisée en ce que** le corps de sécurisation (15) est prévu dans une ouverture en forme de fente pour la réception d'un bourrelet d'une unité de bâche coulissante (7).

9. Carrosserie de véhicule utilitaire (1) selon l'une des revendications 1 à 8, **caractérisée en ce que** les ouvertures en forme de fente (16, 17) sont prévues dans le montant d'angle (9) et dans la partie de châssis de véhicule utilitaire au niveau des extrémités inférieure et supérieure du profilé de serrage de bâche (11) **et en ce que,** auxdites deux ouvertures en forme de fente (16, 17), respectivement un corps de sécurité (15) correspondant est associé au niveau de l'extrémité inférieure et au niveau de l'extrémité supérieure du profilé de serrage de bâche (11), lesquels corps de sécurité sont prévus à une distance en hauteur parallèlement les uns aux autres au niveau d'une extrémité supérieure et au niveau d'une extrémité inférieure du profilé de serrage de bâche (11).
